# EUROPÄISCHE PATENTSCHRIFT

(11) **EP 0 522 659 B1**
(45) Veröffentlichungstag und Bekanntmachung des Hinweises auf die Patenterteilung: **23.10.1996**
(21) Anmeldenummer: 92202083.9
(22) Anmeldetag: 08.07.1992
(51) Int. Cl.: H02M 3/335

(54) **Mikroprozessorgesteuerter Gleichspannungswandler**
DC-DC converter with microprocessor control
Convertisseur continu-continu contrôlé par microprocesseur

(30) Priorität: 11.07.1991 DE 4122945
(43) Veröffentlichungstag der Anmeldung: 13.01.1993
(73) Patentinhaber: Philips Patentverwaltung GmbH, 22335 Hamburg (DE); Philips Electronics N.V., 5621 BA Eindhoven (NL)
(72) Erfinder: Brunk, M., Prof. Dr.-Ing., W-2000 Hamburg 1 (DE); Chluba, Günther, W-2000 Hamburg 1 (DE); Düssel, Karl-Heinz, Dipl.-Ing., W-2000 Hamburg 1 (DE)
(74) Vertreter: Volmer, Georg, Dipl.-Ing.

(56) Entgegenhaltungen:
- DE-A- 4 013 477

## Beschreibung

Die Erfindung betrifft einen Gleichspannungswandler mit einem steuerbaren Schalter zur Erzeugung mindestens einer Ausgangsspannung, wobei die Einschaltdauer des steuerbaren Schalters regelbar ist.

Für die Versorgung elektronischer Geräte werden Gleichspannungswandler benötigt, die eine oder mehrere Ausgangsspannungen liefern. Bei Gleichspannungswandlern mit einem steuerbaren Schalter handelt es sich um getaktete Gleichspannungswandler, wobei insbesondere die Grundtypen Sperrwandler und Durchflußwandler zu unterscheiden sind. Dabei wird eine Eingangsgleichspannung mit Hilfe des steuerbaren Schalters in eine Rechteckspannung umgewandelt, die gleichgerichtet und gesiebt wird. Der steuerbare Schalter kann beispielsweise mit Frequenzen zwischen 50 kHz und 200 kHz betrieben werden. Der steuerbare Schalter wird durch Impulse gesteuert, deren die Einschaltdauer kennzeichnende Breite in Abhängigkeit von Lastschwankungen der Ausgangsspannung moduliert werden. Die Impulse werden von einer Steuerschaltung, beispielsweise einem Impulsbreitenmodulator, erzeugt und an die Steuerelektrode des steuerbaren Schalters gelegt. Dabei wird in der Regel bei konstanter Schaltfrequenz des steuerbaren Schalters die Einschaltdauer verändert.

In der nicht vorveröffentlichten DE 40 13 477 ist vorgeschlagen worden, bei einem Gleichspannungswandler der eingangs genannten Art die Einschaltdauer des steuerbaren Schalters mittels eines Mikroprozessors zu steuern, wobei die Einschaltdauer während einer vorgegebenen Anzahl von Einschaltzyklen des steuerbaren Schalters konstant ist. Dabei werden einer den steuerbaren Schalter ansteuernden Treiberstufe quantisierte Werte vorgegeben, welche die Einschaltdauer bestimmen. Im Betrieb hat sich gezeigt, daß es zu Instabilitäten der Regelung des Gleichspannungswandlers kommen.

Der Erfindung liegt die Aufgabe zugrunde, einen Gleichspannungswandler der eingangs genannten Art anzugeben, bei dem auch bei Einsatz eines kostengünstigen Mikroprozessors die Stabilität der Regelung sichergestellt wird.

Diese Aufgabe wird bei einem Gleichspannungswandler der eingangs genannten Art dadurch gelöst, daß zur Regelung der Einschaltdauer des steuerbaren Schalters ein Mikroprozessor vorgesehen ist, daß Mittel zur mindestens einmaligen Abtastung der Ausgangsspannung und/oder des Ausgangsstroms und/oder mindestens einer weitere Größe des Gleichspannungswandlers in der zur Berechnung der Einschaltdauer des steuerbaren Schalters zur Verfügung stehenden Rechenzeit des Mikroprozessors vorgesehen sind und daß für die Einschaltdauer des steuerbaren Schalters diskrete Werte vorgesehen sind, die aus der jeweils ermittelten Einschaltdauer durch eine der Zeitauflösung des Mikroprozessors entsprechende Grobquantisierung und eine jeder Quantisierungsstufe der Grobquantisierung zugeordnete Feinquantisierung gebildet werden, wobei zur Feinquantisierung eine Quantisierungsstufe der Grobquantisierung in Teilbereiche unterteilt ist, denen jeweils die die diskreten Werte des steuerbaren Schalters bestimmende Feinquantisierungsstufen zugeordnet sind.

Die Erfindung geht dabei von der Erkenntnis aus, daß zur Erreichung eines geringen Bauvolumens des Gleichspannungswandlers der steuerbare Schalter mit Schaltfrequenzen von beispielsweise 50 kHz zu betreiben ist. Bei Verwendung eines kostengünstigen Mikroprozessors ist jedoch die zur Ermittlung der jeweiligen Einschaltdauer benötigte Rechenzeit des Mikroprozessors entsprechend einer derartig hohen Schaltfrequenz zu hoch. Aus diesem Grund erfordert die Berechnung der jeweiligen Einschaltdauer mittels des Mikroprozessors jeweils mehr als einen Takt der Schaltfrequenz des steuerbaren Schalters, also Unterabtastung. Beträgt die zur Berechnung der Einschaltdauer des steuerbaren Schalters benötigte Rechenzeit beispielsweise 4 Takte der Schaltfrequenz, so muß eine Unterabtastung um den Faktor 4 gewählt werden, d.h. es wird alle 4 Takte der Schaltfrequenz eine neue Einschaltdauer ermittelt und der steuerbare Schalter entsprechend angesteuert. Hierdurch wird es möglich, als Mikroprozessor einen "langsamen", handelsüblichen und somit preiswerten Typ zu verwenden. In der zur Berechnung der Einschaltdauer des steuerbaren Schalters zur Verfügung stehenden Rechenzeit wird beispielsweise die Ausgangsspannung vorteilhafterweise mehr als einmal abgetastet, es kann beispielsweise die Abtastung der Ausgangsspannung im ersten und im dritten Takt der zur Berechnung der Einschaltdauer benötigten Rechenzeit erfolgen. Hierdurch steht zur Ermittlung der Einschaltdauer jeweils ein aktuellerer Wert der Ausgangsspannung zur Verfügung, wodurch ein erster Beitrag zur Verbesserung der Stabilität der Regelung des Gleichspannungswandlers geliefert wird. Sofern aufgrund der Unterabtastung weitere Rechenzeit des Mikroprozessors zur Verfügung steht, kann in einem verbleibenden Takt auch noch die Abtastung des Ausgangsstroms oder weiterer den Gleichspannungswandler kennzeichnender Signale erfolgen. Wird die jeweilige Einschaltdauer der Ansteuerimpulse des steuerbaren Schalters durch einen Timer des Mikroprozessors realisiert, so ist die Zeitauflösung der darzustellenden Werte der Einschaltdauer durch die Zeitauflösung des Timers des Mikroprozessors vorgegeben. Hierdurch entsteht eine Quantisierung, die ebenfalls zu Stabilitätsproblemen führt. Aus diesem Grund erfolgt zunächst eine Grobquantisierung entsprechend der Zeitauflösung des Mikroprozessortimers und anschließend eine Feinquantisierung, die dadurch erfolgt, daß jede Quantisierungsstufe der Grobquantisierung in eine von dem Faktor der Unterabtastung abhängige Anzahl von Teilbereichen unterteilt ist, denen jeweils Feinquantisierungsstufen zugeordnet sind. Durch diese Feinquantisierung wird es möglich, anstelle einer statischen Ausgabe der Einschaltdauer an den steuerbaren Schalter aufgrund einer Unterabtastung um den Faktor 4 von beispielsweise 4 Takten, d.h. der Wert der Einschaltdauer wird für 4 Takte konstant gehalten, eine entsprechend der Feinquantisierung vorgegebene dynamische Ausgabe durchzuführen. Erfolgt beispielsweise die Unterteilung einer Quantisierungsstufe in 4 Teilbereiche als Konsequenz einer Unterabtastung von Faktor 4, so kann im zeitlichen Mittel der vier Takte ein feinquantisierter Wert für die Einschaltdauer an den steuerbaren Schalter ausgegeben werden. Sind beispielsweise aufgrund der Grobquantisierung lediglich zehn grobquantisierte Werte der Einschaltdauer möglich, so entstehen auf diese Weise durch die Feinquantisierung nunmehr 40 feinquantisierte Werte. Hierdurch werden die aufgrund der Unterabtastung möglicherweise hervorgerufenen Stabilitätsprobleme weitestgehend kompensiert, so daß trotz eines verhältnismäßig "langsamen" Mikroprozessors eine stabile Regelung des Gleichspannungswandlers möglich ist.

Bei einer Ausgestaltungsform bildet der Mikroprozessor aus mindestens einem insbesondere aus der Ausgangsspannung und/oder dem Ausgangsstrom des Gleichspannungswandlers ableitbaren Signal und mindestens einem in einem Speicher des Mikroprozessors speicherbaren Sollwert ein Differenzsignal, aus dem mittels eines digitalen Filters mit einer Reglerübertragungsfunktion insbesondere mit PIT1-Verhalten die Einschaltdauer ermittelt wird. Die Ausgangsspannung, der Ausgangsstrom sowie weitere zu überwachende Größen des Gleichspannungswandlers werden dem Mikroprozessor über einen im Mikroprozessor enthaltenen Multiplexer zugeführt, anschließend über einen Analog-Digital-Wandler jeweils in ein Digitalsignal umgesetzt, welches als Istwert mit dem im Mikroprozessor gespeicherten digitalen Sollwert verglichen wird. Das so erhaltene Differenzsignal bildet das Eingangssignal des digitalen Filters. Das digitale Filter bildet einen PIT1-Regler mit Störgrößenaufschaltung. Das Ausgangssignal des digitalen Filters wird dem aus der Grobquantisierung und der Feinqantisierung gebildeten internen Pulsweitenmodulator zugeführt, der die Einschaltdauer des steuerbaren Schalters umsetzt und in bekannter Weise über einen Treiber an die Steuerelektrode des steuerbaren Schalters weiterleitet.

Bei einer weiteren Ausgestaltungsform werden die von der Verstärkung des digitalen Filters abhängenden und dessen Verhalten bestimmenden Koeffizienten so gewählt, daß das digitale Filter eine große Verstärkung bei guter Dämpfung und/oder eine gute Entzerrung insbesondere des P-Anteils der statischen Reglerkennlinie aufweist. Hierdurch ist es einerseits möglich, einen Kompromiß zwischen der Anforderung an einen schnellen Regelkreis und kleiner Einschwingdauer, andererseits eine gleichförmige Quantisierungs-Reglerkennlinie zu erzielen.

Bei einer weiteren Ausgestaltungsform erfolgt die Erzeugung der Schaltfrequenz und der Einschaltdauer mittels eines Timers des Mikroprozessors. Dabei wird der Timer zur Erzeugung der Schaltfrequenz im sog. Auto-Reload-Modus betrieben. Der Timer zählt dabei nicht von Null aus, sondern von einem jeweils nachgeladenen Wert aus hoch. Dieser nachgeladene Wert bestimmt die Schaltfrequenz des steuerbaren Schalters. Die Einschaltdauer wird beispielsweise mit Hilfe einer Compare-Funktion des Mikroprozessors erzeugt.

Bei einer Ausgestaltungsform erfolgt die Feinquantisierung mittels einer Tabelle, durch die die Quantisierungsstufen der Grobquantisierung den Werten der Feinquantisierung zuordenbar sind. Dabei können für jeden Takt der Unterabtastung jeweils verschieden kodierte Tabellenteile verwendet werden, so daß hierdurch in sehr einfacher Weise die Feinquantisierung realisierbar ist.

Im folgenden wird die Erfindung anhand der in den Figuren dargestellten Ausführungsbeispiele näher erläutert.

Es zeigen:
- Fig. 1: das Blockschaltbild eines Gleichspannungswandlers,
- Fig. 2: ein Diagramm zur Feinquantisierung,
- Fig. 3: ein Diagramm zur Unterabtastung,
- Fig. 3a bis 3d: Diagramme zur Feinquantisierung,
- Fig. 4: ein Ausführungsbeispiel für einen Gleichspannungs wandler mit digitaler Regelung.

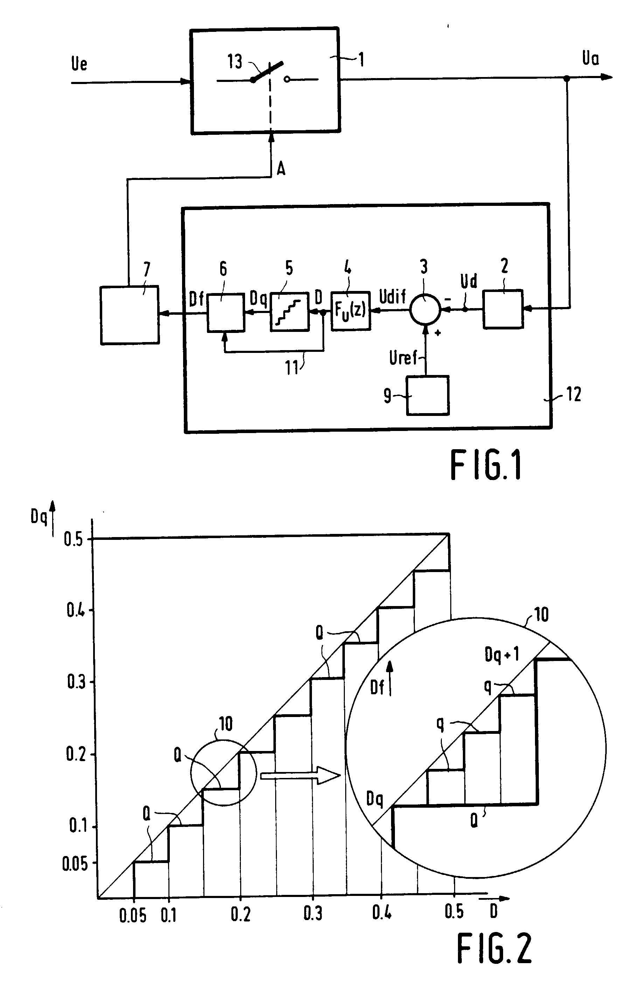

Der in Fig. 1 dargestellte Gleichspannungswandler 1 wird von einer Eingangsspannung Ue gespeist. Der Gleichspannungswandler 1 weist einen steuerbaren Schalter 13 auf, der von einem Steuersignal A einer Treiberstufe 7 gesteuert wird. Am Ausgang des beispielsweise als Sperr- oder Durchflußwandler ausgebildeten Gleichspannungswandlers 1 liegt eine Ausgangsspannung Ua. Die Regelung der Ausgangsspannung Ua erfolgt mittels eines Mikroprozessors 12, der in Abhängigkeit der Ausgangsspannung Ua ein die Einschaltdauer des steuerbaren Schalters kennzeichnendes Regelsignal Df für die Treiberstufe 7 erzeugt. Für die vom Mikroprozessor 12 im einzelnen auszuführenden Arbeitsschritte wurden in Fig. 1 aus Gründen der Übersichtlichkeit einzelne Blöcke eingezeichnet, die vom Mikroprozessor 12 im wesentlichen mittels Software ausgeführt werden. Hierzu wird dem Mikroprozessor 12 die Ausgangsspannung Ua zugeführt, die zunächst mittels eines Analog-Digital-Wandlers 2 in ein Digitalsignal Ud gewandelt wird. Die Werte des Digitalsignals Ud werden mit einem in einem Speicher 9 des Mikroprozessors 12 gespeicherten Sollwert Uref mittels eines Addierers 3 verglichen. Der so ermittelte Differenzwert Udif am Ausgang des Addierers wird einem digitalen Filter 4 zugeführt, dessen Reglerübertragungsfunktion F_{U} (z) ein PIT1-Verhalten aufweist. Die vom digitalen Filter 4 ermittelten, die Einschaltdauer des steuerbaren Schalters 13 kennzeichnenden Werte D werden mit Hilfe einer Ausgabeeinheit 5, 6 mittels einer Grobquantisierung 5 zunächst in Werte Dq grobquantisiert und anschließend mittels einer Feinquantisierung 6 in die Werte Df feinquantisiert.

Bei dem in Fig. 1 dargestellten Ausführungsbeispiel erfolgt im Mikroprozessor 12 zunächst mittels des Analog-Digital-Wandlers 2 eine Wandlung der analogen Ausgangsspannung Ua in die digitale Regelgröße des Digitalwerts Ud. Dieser wird mit dem im Speicher 9 enthaltenen Sollwert Uref, der vorher programmiert wurde, mit Hilfe des Addierers 3 verglichen. Der am Ausgang des Addierers 3 anliegende Differenzwert Udif stellt eine Meßgröße für den Fehler der Ausgangsspannung Ua dar. Das digitale Filter 4 bildet durch Software das Verhalten eines analogen Schleifenfilters nach und weist PIT1-Verhalten auf. Die von der Verstärkung abhängigen und damit das Verhalten des digitalen Filters bestimmenden Koeffizienten sind dabei so gewählt, daß das digitale Filter 4 eine große Verstärkung bei guter Dämpfung aufweist. Hierdurch wird ein Kompromiß zwischen Schnelligkeit und Einschwingdauer der Regelung des Gleichspannungswandlers gewährleistet. Darüber hinaus weist das digitale Filter 4 eine gute Entzerrung insbesondere des P-Anteils seiner statischen Reglerkennlinie auf. Eine derartige Entzerrung wird notwendig, da in Folge der Digitalisierung folgende Fehler auftreten: Quantisierungsfehler aufgrund der Analog/Digital-Wandlung (+-1/2 Stufe), hardwarebedingte Fehler, Fehler aufgrund innerer Berechnungen bzw. Normierungen der zu realisierenden Differenzengleichungen. So müssen beispielsweise aufgrund der begrenzten Wortlänge des Mikroprozessors Zwischenergebnisse abgeschnitten werden. Der durch die genannten Fehler hervorgerufene Informationsverlust führt zu einer fehlerhaften Vorgabe der Einschaltdauer des steuerbaren Schalters. Hierdurch zeigt sich die statische Quantisierungskennlinie des digitalen Filters mehr oder weniger gleichförmig. Mit Hilfe einer Entzerrung, d.h. durch geeignete Koeffizientenwahl bei der Reglerdimensionierung kann eine möglichst gleichförmige Reglerkennlinie eingestellt werden.

Bei der Auswahl des Mikroprozessors, der vor allem die Aufgabe der Regelung realisieren soll, sind mehrere Kriterien zu berücksichtigen. Der Mikroprozessor sollte möglichst preisgünstig sein, damit er im Vergleich zu analogen Regelungen wirtschaftlich zum Einsatz kommen kann. Dabei ist die zur Ermittlung der jeweiligen Einschaltdauer D benötigte Rechenzeit des Mikroprozessors 12 größer als ein Takt der Schaltfrequenz des steuerbaren Schalters 13. So werden beim Einsatz des Mikroprozessors SAB 80C535 der Firma Siemens beispielsweise zur Berechnung der Einschaltdauer D vier Takte der Schaltfrequenz des steuerbaren Schalters 13 benötigt. Hierdurch entsteht eine Unterabtastung der Ausgangsspannung Ua, die zu Stabilitätsproblemen des Regelkreises führt. Dieser Nachteil der Unterabtastung kann zu einem ersten Teil dadurch kompensiert werden, daß in der zur Berechnung der Einschaltdauer D des steuerbaren Schalters 13 zur Verfügung stehenden Rechenzeit des Mikroprozessors 12 die Ausgangsspannung Ua mehr als einmal abgetastet wird. Dies soll im folgenden anhand eines Beispieles näher erläutert werden:

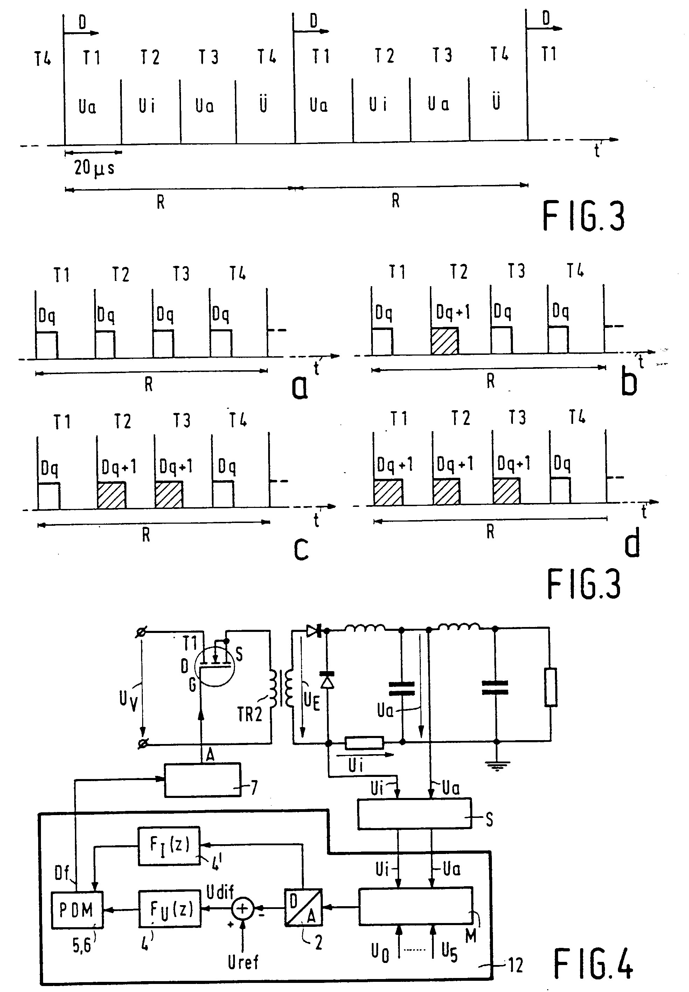

Bei einer Schaltfrequenz von 50 kHz, was einer Dauer eines Taktes von 20 µsec entspricht, und einer Unterabtastung um den Faktor 4, d.h. die zur Berechnung der Einschaltdauer D des steuerbaren Schalters 13 benötigte Rechenzeit beträgt 4 Takte der Schaltfrequenz des steuerbaren Schalters, stehen somit vier Takte bzw. 80 µsec für einen kompletten Rechenzyklus zur Verfügung. Für eine Analog-Digital-Wandlung werden dabei jeweils 15 µsec benötigt. Somit wird es möglich, die Ausgangsspannung beispielsweise im ersten und im dritten Takt, also 2-mal abzutasten. Hierdurch wird erreicht, daß die verwendeten Spannungswerte Ua zur Berechnung eines neuen Wertes D für die Einschaltdauer am Ende jedes vierten Taktes um maximal fünf Takte verzögert sind, da zur Berechnung einer neuen Einschaltdauer jeweils 3 abgetastete Werte der Ausgangsspannung benötigt werden. Dies wird im Zusammenhang mit Fig. 3 noch genauer erläutert. Hierdurch erfolgt somit eine "gestufte Unterabtastung" der Ausgangsspannung Ua. Im zweiten Takt kann darüber hinaus beispielsweise der Ausgangsstrom des Gleichspannungswandlers 1 und im vierten Takt beispielsweise zu Überwachungszwecken eine weitere, den Gleichspannungswandler 1 kennzeichnende Größe abgetastet werden.

Die von der Ausgabeeinheit 5, 6 des in Fig. 1 dargestellten Ausführungsbeispiels ermittelte Einschaltdauer ist lediglich in diskreten Werten Df vorgebbar, die aus der jeweils ermittelten Einschaltdauer D durch eine Grobquantisierung 5 und eine anschließende Feinquantisierung 6 gebildet werden. Die Grobquantisierung 5 ist dabei durch die Zeitauflösung des Timers des Mikroprozessors festgelegt. Dies ist somit prinzip- und hardware-bedingt. Eine derartige grobquantisierte Vorgabe der Einschaltdauer kann jedoch zusammen mit der Unterabtastung zu Stabilitätsproblemen des durch den Mikroprozessor 12 realisierten Regelkreises führen. So sind bei dem bereits erwähnten Mikroprozessor SAB 80C535 mit einer Zeitauflösung der Einschaltdauer von 1 µsec und einer Schaltperiode von 20 µsec lediglich zehn quantisierte Werte Dq der Einschaltdauer realisierbar. Dieser Nachteil kann durch die der Grobquantisierung 5 nachgeschaltete Feinquantisierung weitestgehend kompensiert werden. Hierzu wird der grobquantisierte Wert Dq der Einschaltdauer D nicht einfach über die der Unterabtastung entsprechende Anzahl von Takten der Taktfrequenz des steuerbaren Schalters 13 konstant ausgegeben, sondern in Abhängigkeit vom berechneten Wert D der Einschaltdauer innerhalb dieser Takte zeitlich geändert. Die Verbindung 11 in Fig. 1, die darstellt, daß dem Feinquantisierer 6 die Werte D der Einschaltdauer sowie die grobquantisierten Werte Dq zugeführt werden, soll dies veranschaulichen. Zur Feinquantisierung ist jede Quantisierungsstufe der Grobquantisierung 5 in von dem Faktor der Unterabtastung abhängige Teilbereiche unterteilt, denen jeweils die feinquantisierte Einschaltdauer Df des steuerbaren Schalters bestimmende Feinquantisierungsstufen zugeordnet sind. Dabei kann die Feinquantisierung 6 beispielsweise mittels einer Tabelle erfolgen, durch die die Quantisierungsstufen der Grobquantisierung den Werten der Feinquantisierung 7 zuordenbar sind. Eine Veranschaulichung der Feinquantisierung 6 ist im Zusammenhang mit Fig. 2 erläutert. Diese Feinquantisierung wirkt sich so aus, als ob eine feinere Zeitauflösung des aus der Ausgabeeinheit 5, 6 gebildeten Pulsbreitenmodulators, d. h. des Timers des Mikroprozesses erreichbar wäre. Hierdurch verhält sich der Regelkreis wesentlich stabiler und unkritischer. Darüber hinaus werden die Amplituden von Subharmonischen der Taktfrequenz des steuerbaren Schalters, die insbesondere aufgrund der Unterabtastung auftreten, wesentlich verringert. Die Änderung der Einschaltdauer des steuerbaren Schalters erfolgt aufgrund der Feinquantisierung durch die Ausgabeeinheit 5, 6 nicht erst nach der durch die Unterabtastung vorgegebenen Anzahl von Takten der Schaltfrequenz des steuerbaren Schalters, sondern in der im Zusammenhang mit Fig. 3 bzw. Fig. 3a bis d beschriebenen Art und Weise. Entscheidend für die Maßnahme der Feinquantisierung in Verbindung mit der Unterabtastung ist, daß hierdurch weit weniger hohe Anforderungen an die Geschwindigkeit des Mikroprozessors gestellt werden müssen, als dies bei einem Verzicht hierauf und einer Echtzeitsteuerung der Fall wäre.

Durch die Kombination aus der Verwendung eines kostengünstigen Mikroprozessors zur Regelung eines Gleichspannungswandlers, durch die gestufte Unterabtastung sowie durch die Feinquantisierung wird die Regelkreisdynamik verbessert und die Regelkreisstabilität sichergestellt. Durch die zusätzlichen Vorteile einer programmierbaren Überwachung und Signalisierung mit Hilfe des Mikroprozessors wird ein weiterer wesentlicher Anreiz zum Einsatz des Mikroprozessors gegeben. Außerdem kann die Realisierung von Gleichspannungswandlern mit Mikroprozessoren durch eine flexible und anpassungsfähige Software vereinfacht und standardisiert werden.

Das in Fig. 2 dargestellte Diagramm zeigt die grobquantisierten Werte Dq der Einschaltdauer in Abhängigkeit der errechneten Werte D der Einschaltdauer. Dabei ergibt sich, wie bereits im Zusammenhang mit Fig. 1 gezeigt wurde, aufgrund der Hardware des Mikroprozessors eine Quantisierungskennlinie mit Quantisierungsstufen Q. Die Zeitauflösung beträgt beim Mikroprozessor SAB 80C535 der Fa. Siemens 1µsec, so daß sich bei einer Schaltperiode von 20µsec für die Quantisierung des Tastverhältnisses 0,05 ergibt. Hieraus ergeben sich die in Fig. 2 dargestellten zehn möglichen Quantisierungsstufen Q als Funktion der ermittelten Einschaltdauer D. Zur Verdeutlichung der Feinquantisierung ist in Fig. 2 eine beliebige Stufe in einem Ausschnitt 10 vergrößert dargestellt. In dem vergrößerten Ausschnitt 10 sind die Feinquantisierungsstufen q der feinquantisierten Werte Df der Einschaltdauer dargestellt. Hierzu ist eine Quantisierungsstufe Q in vier gleich große Teilbereiche unterteilt. Abhängig vom ermittelten Wert D der Einschaltdauer werden durch die Feinquantisierung anstelle eines statischen Wertes Dq im ersten Teilbereich der Quantisierungsstufe Q folgende Werte ermittelt:
Im ersten Teilbereich: viermal Dq
Im zweiten Teilbereich: dreimal Dq und einmal Dq + 1
Im dritten Teilbereich: zweimal Dq und zweimal Dq + 1
Im vierten Teilbereich: einmal Dq und dreimal Dq + 1.

Wird nun der zeitliche Mittelwert bei jeder der vier möglichen Kombinationen über vier Takte bestimmt, so erhält man zwischen Dq und Dq + 1 drei zusätzliche Zwischenwerte, d. h. durch die Feinquantisierung resultieren aus den anfänglich Q gleich 10 quantisierten Werten Dq der Einschaltdauer nunmehr 40 Werte. Mit dieser Feinquantisierung läßt sich der geschlossene Regelkreis stabilisieren, wobei ein zusätzlicher Vorteil darin besteht, daß die aufgrund der Unterabtastung durch den Faktor 4 hervorgerufenen Anteile einer Subharmonischen der Taktfrequenz von 50 kHz bei einem Viertel dieser Taktfrequenz gleich 12,5 kHz im Spektrum der Ausgangsspannungen verringert werden.

Fig. 3 zeigt ein Zeitdiagramm zur Darstellung der Unterabtastung. Dabei sind auf der Zeitachse zwei Zeitrahmen R dargestellt, die jeweils zur Ermittlung der jeweiligen Einschaltdauer D durch den Mikroprozessor benötigt werden. Dies soll wieder am Beispiel des Mikroprozessors SAB 80C535 bei einer Unterabtastung um den Faktor 4 gezeigt werden. Wie bereits erwähnt, werden dabei zur Berechnung der jeweiligen Einschaltdauer D jeweils vier Takte der Taktfrequenz des steuerbaren Schalters (Fig. 1) benötigt. Am Ende jedes vierten Taktes erfolgt die Ausgabe des Wertes D der Einschaltdauer. Dies ist in Fig. 3 durch einen Pfeil am Ende jedes vierten Taktes T4 der Rechenzeit R dargestellt. Die bereits im Zusammenhang mit Fig. 1 beschriebene gestufte Unterabtastung erfolgt somit folgendermaßen. In einem ersten Takt T1 sowie in einem dritten Takt T3 wird die Ausgangsspannung Ua des Gleichspannungswandlers abgetastet. In einem zweiten Takt T2 kann eine den Ausgangsstrom des Gleichspannungswandlers kennzeichnende Spannung Ui und in einem vierten Takt T4 zur Überwachung eine weitere, den Gleichspannungswandler kennzeichnende Größe Ü abgetastet werden. Hierdurch wird erreicht, daß die verwendeten Spannungswerte Ua zur Berechnung einer neuen Einschaltdauer D jeweils als aktuellere Werte zur Verfügung stehen, wodurch die Stabilität des Regelkreises des Gleichspannungswandlers verbessert wird. Gemeinsam mit der im Zusammenhang mit Fig. 1 und Fig. 2 bereits beschriebenen Feinquantisierung führt eine derartige gestufte Unterabtastung zu einer verbesserten Reglerdynamik sowie einer hohen Regelkreisstabilität.

Die Fig. 3a bis 3d zeigen vier Zeitdiagramme zur Darstellung von vier entsprechend dem in Fig. 2 dargestellten Ausführungsbeispiel quantisierter Werte der Einschaltdauer. Dabei ist auf der Zeitachse jeweils ein Zeitrahmen R dargestellt, der jeweils zur Ermittlung der jeweiligen Einschaltdauer D durch den Mikroprozessor benötigt wird. In Fig. 3a ist dargestellt, daß für den Fall, daß der ermittelte Wert der Einschaltdauer D im ersten Teilbereich einer Quantisierungsstufe Q (Fig. 2) zum Liegen kommt, in allen vier Takten T1, T2, T3, T4 eines Zeitrahmens R die Ausgabe eines grobquantisierten Wertes Dq der Einschaltdauer erfolgt. In Fig. 3b ist dargestellt, daß für den Fall, daß der berechnete Wert D der Einschaltdauer im zweiten Viertel, d.h. im zweiten Teilbereich einer Grobquantisierungsstufe Q zum Liegen kommt, in drei Takten T1, T3, T4 die Ausgabe der niedrigeren Grobquantisierungsstufe Dq erfolgt, während im zweiten Takt T2 der Wert Dq+1 ausgegeben wird. Hierdurch erfolgt im zeitlichen Mittel die Ausgabe eines feinquantisierten Wertes der Einschaltdauer Df, der dem in Fig. 2 im zweiten Teilbereich der Quantisierungsstufe Q zugeordneten Feinquantisierungsstufe q zugeordnet ist. In Fig. 3c ist der Fall dargestellt, daß die ermittelte Einschaltdauer D im dritten Viertel einer Grobquantisierungsstufe Q zum Liegen kommt. In diesem Fall erfolgt in zwei Takten der Rechenzeit R die Ausgabe der jeweils größeren Grobquantisierungsstufe Dq+1, während in zwei Takten T1, T4 die Ausgabe der niedrigeren Grobquantisierungsstufe Dq erfolgt. Hierdurch entsteht im zeitlichen Mittel eine Feinquantisierung der Einschaltdauer Df, die einem Zwischenwert zwischen der Quantisierungsstufe Dq und Dq+1 entspricht. In Fig. 3d ist schließlich dargestellt, daß der ermittelte Wert D der Einschaltdauer im vierten Viertel der Grobquantisierungsstufe Q liegt. In diesem Fall erfolgt entsprechend drei mal die Ausgabe des Wertes Dq+1 und in lediglich einem Takt T4 die Ausgabe des niedrigeren Grobquantisierungswertes Dq. Auf diese Weise lassen sich die im Zusammenhang mit Fig. 2 bereits beschriebenen Feinquantisierungsstufen q angeben. Die Reihenfolge der Zuordnung der Werte Dq bzw. Dq+1 zu den jeweiligen vier Takten T1..T4 erfolgt dabei willkürlich. Fig. 4 Zeigt ein weiteres Ausführungsbeispiel eines mikroprozessorgesteuerten Gleichspannungswandlers. Hierbei kommt ein Gleichspannungswandler zum Einsatz, der nach dem Durchflußwandlerprizip arbeitet. Dieses ist beispielsweise in "Schaltnetzteile-Grundlagen, Schaltungsbeispiele" von Joachim Wüstehube beschrieben. Hierbei wird eine Gleichspannung Uv mittels eines als Feldeffekttransistor T1 ausgebildeten steuerbaren Schalters in eine Rechteckspannung umgewandelt, die mittels eines Transformators Tr2 übersetzt wird. Auf der Sekundärseite erfolgt eine Gleichspannungswandlung mit Hilfe des Durchflußwandlers und anschließender LC-Siebung. Die Stabilisierung der Ausgangsspannung Ua erfolgt mit Hilfe eines über eine Schnittstelle S angesteuerten Mikroprozessors 12, der durch Abgriff der Ausgangsspannung Ua als erste Regelgröße sowie einer den Ausgangsstrom kennzeichnenden zweiten Regelgröße Ui die Einschaltdauer des steuerbaren Schalters T1 beeinflußt. Dabei werden die analogen Regelgrößen Ua und Ui über einen Multiplexer auf einen Analog-Digitalwandler 2 gegeben, wobei dem Multiplexer M noch weitere Signale U0 bis U5 zur Überwachung des Gleichspannungswandlers zuführbar sind. Die erste Regelgröße Ua wird nach der Digitalwandlung mit einem Sollwert Usoll verglichen und die Differenz anschließend in einem digitalen Filter mit PIT1-Verhalten weiterverarbeitet. Die zweite Regelgröße Ui wird ebenfalls digitalisiert an ein zweites digitales Filter mit einer Übertragungsfunktion mit P-Verhalten (Störgrößensaufschaltung) weitergeleitet. Die Ergebnisse beider Regelungen werden im Pulsdauermodulator 5,6 in das Tastverhältnis bzw. die Einschaltdauer Df des steuerbaren Schalters T1 umgesetzt und über einen Treiber 7 an die Gate-Elektrode des steuerbaren Schalters T1 übermittelt. Der Treiber 7 bewirkt einerseits eine ggf. erforderliche Invertierung des vom Pulsdauermodulator 5,6 gelieferten Signals sowie eine Verstärkung. Mit Hilfe des im Mikroprozessor 12 ohnehin vorhandenen Multiplexers M ist es möglich, neben der Ausgangsspannung und dem Ausgangsstrom auch weitere, das Verhalten des Gleichspannungswandlers kennzeichnende Größen Zu überwachen und gegebenenfalls zur Signalisierung zu verwenden. Dies ist im Vergleich zu analogen Regelkreisen auf einfache Weise möglich.

## Patentansprüche

1. Gleichspannungswandler (1) mit einem steuerbaren Schalter (13) zur Erzeugung mindestens einer Ausgangsspannung (Ua), wobei die Einschaltdauer (D) des steuerbaren Schalters (13) regelbar ist,
dadurch gekennzeichnet,
daß zur Regelung der Einschaltdauer (D) des steuerbaren Schalters ein Mikroprozessor (12) vorgesehen ist,
daß Mittel zur mindestens einmaligen Abtastung der Ausgangsspannung (Ua) und/oder des Ausgangsstroms (Ui) und/oder mindestens einer weitere Größe (Ui) des Gleichspannungswandlers (1) in der zur Berechnung der Einschaltdauer (D) des steuerbaren Schalters (13) zur Verfügung stehenden Rechenzeit (R) des Mikroprozessors (13) vorgesehen sind und
daß für die Einschaltdauer (D) des steuerbaren Schalters (13) diskrete Werte (Df) vorgesehen sind, die aus der jeweils ermittelten Einschaltdauer (D) durch eine der Zeitauflösung des Mikroprozessors entsprechende Grobquantisierung (5) und eine jeder Quantisierungsstufe der Grobquantisierung (5) zugeordnete Feinquantisierung (6) gebildet werden, wobei zur Feinquantisierung (6) eine Quantisierungsstufe (Q) der Grobquantisierung (5) in Teilbereiche unterteilt ist, denen jeweils die die diskreten Werte (Df) des steuerbaren Schalters bestimmende Feinquantisierungsstufen (q) zugeordnet sind.

2. Gleichspannungswandler nach Anspruch 1, dadurch gekennzeichnet, daß die zur Ermittlung der jeweiligen Einschaltdauer (D) benötigte Rechenzeit des Mikroprozessors (12) größer als ein Takt der Schaltfrequenz des steuerbaren Schalters (13) ist.

3. Gleichspannungswandler nach einem der Ansprüche 1 oder 2, dadurch gekennzeichnet, daß der Mikroprozessor (12) aus mindestens einem insbesondere aus der Ausgangsspannung (Ua) und/oder dem Ausgangsstrom (Ui) des Gleichspannungswandlers (1) ableitbaren Signal (Ud) und mindestens einem in einem Speicher (9) des Mikroprozessors (12) speicherbaren Sollwert (Uref) ein Differenzsignal (Udif) bildet, aus dem mittels eines digitalen Filters (4) mit einer Reglerübertragungsfunktion (Fᵤ(z)) insbesondere mit PIT1-Verhalten die Einschaltdauer (D) ermittelt wird.

4. Gleichspannungswandler nach einem der Ansprüche 1 bis 3, dadurch gekennzeichnet, daß die von der Verstärkung des digitalen Filters (4) abhängigen und dessen Verhalten bestimmenden Koeffizienten so gewählt werden, daß das digitale Filter (4) eine große Verstärkung bei guter Dämpfung und/oder eine gute Entzerrung insbesondere des P-Anteils der statischen Reglerkennlinie aufweist.

5. Gleichspannungswandler nach einem der Ansprüche 1 bis 4, dadurch gekennzeichnet, daß die Ausgangsspannung (Ua), der Ausgangsstrom (Ui) und die zu überwachenden weiteren Signale (U0 ... U5) dem Mikroprozessor (12) mittels eines Multiplexers (M) des Mikroprozessors (12) zugeführt werden.

6. Gleichspannungswandler nach einem der Ansprüche 1 bis 5, dadurch gekennzeichnet, daß zur Feinquantisierung (6) jede Quantisierungsstufe (Q) in vorgebbare Teilbereiche unterteilt ist, denen jeweils eine im zeitlichen Mittel feinquantisierte Einschaltdauer (Df) des steuerbaren Schalters (13) bestimmende Feinquantisierungsstufen (q) zugeordnet sind.

7. Gleichspannungswandler nach einem der Ansprüche 1 bis 6, dadurch gekennzeichnet, daß die Erzeugung der Schaltfrequenz und der Einschaltdauer (Dq, Df) mittels eines Timers des Mikroprozessors (12) erfolgt.

8. Gleichspannungswandler nach einem der Ansprüche 1 bis 7, dadurch gekennzeichnet, daß die Feinquantisierung (6) mittels einer Tabelle erfolgt, durch die die Quantisierungsstufen (Q) der Grobquantisierung (5) den Werten der Feinquantisierung (7) zuordenbar sind.

9. Gleichspannungswandler nach einem der Ansprüche 1 bis 8, dadurch gekennzeichnet, daß vom Mikroprozessor (12) insbesondere in der für die Ermittlung der Einschaltdauer (D) nicht benötigten Rechenzeit (R) mindestens ein zu überwachendes Signal (U0 ... U5) abtastbar ist.

10. Gleichspannungswandler nach einem der Ansprüche 1 bis 9, dadurch gekennzeichnet, daß die Ausgabeeinheit (5, 6) dem steuerbaren Schalter (13) die feinquantisierten Werte (Df) der Einschaltdauer jeweils im Takt der Schaltfrequenz vorgibt.

## Claims

1. A DC-DC converter (1), comprising a controllable switch (13) for producing at least one output voltage (Ua), the duty cycle (D) of the controllable switch (13) being controllable, characterized in that a microprocessor (12) is provided for controlling the duty cycle (D) of the controllable switch, that means are provided for sampling at least once the output voltage (Ua) and/or the output current (Ui) and/or at least one further variable (Ui) of the DC-DC converter (1) in the computation time (R) of the microprocessor (13) available for computing the duty cycle (D) of the controllable switch (13), and that for the duty cycle (D) of the controllable switch (13) there are provided discrete values (Df) which are formed, from the respective duty cycle (D) determined, by a coarse quantization (5) which corresponds to the temporal resolution of this microprocessor and by a fine quantization (6) which is associated with each quantization step of the coarse quantization (5), for fine quantization (6) a quantization step (Q) of the coarse quantization (5) being subdivided into segments with which the respective fine quantization steps (q), determining the discrete values (Df) of the controllable switch, are associated.

2. A DC-DC converter as claimed in Claim 1, characterized in that the computation time required by the microprocessor (12) so as to determine the relevant duty cycle (D) is longer than one period of the switching frequency pf the controllable switch (13).

3. A DC-DC converter as claimed in one of the Claims 1 or 2, characterized in that the microprocessor (12) forms a difference signal (Udif) between at least one signal (Ud) which can be derived notably from the output voltage (Ua) and/or the output current (Ui) of the DC-DC converter (1) and at least one reference value (Uref) which can be stored in a memory (9) of the microprocessor (12), the duty cycle (D) being determined from said difference signal by means of a digital filter (4) having a control transfer function (Fᵤ(z)) of notably the PIT1-type.

4. A DC-DC converter as claimed in one of the Claims 1 to 3, characterized in that the coefficients which are dependent on the gain of the digital filter (4) and which govern the behaviour thereof are chosen so that the digital filter (4) and which govern the behaviour thereof are chosen so that the digital filter (4) has a high gain with suitable attenuation and/or a suitable equalization of notably the P-component of the static control characteristic.

5. A DC-DC converter as claimed in one of the Claims 1 to 4, characterized in that the output voltage (Ua), the output current (Ui) and the further signals (U0...U5) to be monitored are applied to the microprocessor (12) via a multiplexer (M) of the microprocessor (12).

6. A DC-DC converter as claimed in one of the Claims 1 to 5, characterized in that for fine quantization (6) each quantization step (Q) is subdivided into predetermined segments, with each of which there is associated a respective fine quantization step (q) which determines time-averaged fine-quantized duty cycle (Df) of the controllable switch (13).

7. A DC-DC converter as claimed in one of the Claims 1-6, characterized in that the switching frequency and the duty cycle (Dq, Df) are generated by means of a timer of the microprocessor (12).

8. A DC-DC converter as claimed in one of the Claims 1 to 7, characterized in that the fine quantization (6) is performed by means of a table whereby the values of the fine quantization (7) can be assigned to the quantization steps (Q) of the coarse quantization (5).

9. A DC-DC converter as claimed in one of the Claims 1 to 8, characterized in that the microprocessor (12) is capable of sampling at least one signal (U0...U5) to be monitored, notably during the computation time (R) not required for the determination of the duty cycle (D).

10. A DC-DC converter as claimed in one of the Claims 1 to 9, characterized in that the output unit (5, 6) always supplies the controllable switch (13) with the fine-quantized values (Df) of the duty cycle in the rhythm of the switching frequency.

## Revendications

1. Convertisseur de tension continue (1) pourvu d'un interrupteur qui peut être commandé (13) pour la production d'au moins une tension de sortie (Ua), la durée d'enclenchement (D) de l'interrupteur qui peut être commandé (13) étant réglable,
caractérisé en ce
que, pour le réglage de la durée d'enclenchement (D) de l'interrupteur qui peut être commandé, il est prévu un microprocesseur (12),
que des moyens pour au moins un balayage de la tension de sortie (Ua) et/ou du courant de sortie (Ui) et/ou d'au moins une autre grandeur (Ui) du convertisseur de tension continue (1) sont prévus dans le temps de calcul (R) du microprocesseur (13) disponible pour le calcul de la durée d'enclenchement (D) de l'interrupteur qui peut être commandé (13) et
que, pour la durée d'enclenchement (D) de l'interrupteur qui peut être commandé (13) sont prévues des valeurs discrètes (Df) qui sont formées à partir de la durée d'enclenchement respectivement déterminée (D) par une quantification approximative (5) correspondant à la résolution dans le temps du microprocesseur et une quantification précise affectée à chaque étage de quantification de la quantification approximative (5), un étage de quantification (Q) de la quantification approximative (5) étant subdivisé pour la quantification précise (6) en zones partielles auxquelles sont respectivement affectés les étages de quantification précise (q) déterminant les valeurs discrètes (Df) de l'interrupteur qui peut être commandé.

2. Convertisseur de tension continue selon la revendication 1, caractérisé en ce que le temps de calcul du microprocesseur (12) nécessaire pour la détermination de la durée d'enclenchement respective (D) est supérieur à un cycle de la fréquence de commutation de l'interrupteur qui peut être commandé (13).

3. Convertisseur de tension continue selon l'une des revendications 1 ou 2, caractérisé en ce que le microprocesseur (12) forme, à partir d'au moins un signal (Ud) qui peut être dérivé en particulier de la tension de sortie (Ua) et/ou du courant de sortie (Ui) du convertisseur de tension continue (1) et d'au moins une valeur de consigne (Uref) sauvée dans une mémoire (9) du microprocesseur (12), un signal différentiel (Udif) à partir duquel la durée d'enclenchement (D) est déterminée à l'aide d'un filtre numérique (4) pourvu d'une fonction de transmission de régulateur (Fᵤ(Z)), en particulier avec un comportement PIT1.

4. Convertisseur de tension continue selon l'une des revendications 1 à 3, caractérisé en ce que les coefficients dépendant de l'amplification du filtre numérique (4) et déterminant son comportement sont choisis de telle sorte que le filtre numérique (4) présente une amplification importante pour une bonne atténuation et/ou une bonne correction en particulier de la composante P de la caractéristique statique du régulateur.

5. Convertisseur de tension continue selon l'une des revendications 1 à 4, caractérisé en ce que la tension de sortie (Ua) du courant de sortie (Ui) et les autres signaux à contrôler (U0 ... U5) sont amenés au microprocesseur (12) à l'aide d'un multiplexeur (M) du microprocesseur (12).

6. Convertisseur de tension continue selon l'une des revendications 1 à 5, caractérisé en ce que, pour la quantification précise (6), chaque étage de quantification (Q) est subdivisé en zones partielles prédéfinies auxquelles sont respectivement affectés des étages de quantification précise (q) déterminant en moyenne temporelle la durée d'enclenchement (Df) quantifiée avec précision de l'interrupteur qui peut être commandé (13).

7. Convertisseur de tension continue selon l'une des revendications 1 à 6, caractérisé en ce que la production de la fréquence de commutation et de la durée d'enclenchement (Dq, Df) intervient à l'aide d'un compteur de temps du microprocesseur (12).

8. Convertisseur de tension continue selon l'une des revendications 1 à 7, caractérisé en ce que la quantification précise (6) intervient à l'aide d'un tableau par lequel les étages de quantification (Q) de la quantification approximative (5) sont affectés aux valeurs de la quantification précise (7).

9. Convertisseur de tension continue selon l'une des revendications 1 à 8, caractérisé en ce qu'au moins un signal à contrôler (U0 ... U5) peut être balayé par le microprocesseur (12), en particulier dans le temps de calcul (R) qui n'est pas nécessaire pour la détermination de la durée d'enclenchement (D).

10. Convertisseur de tension continue selon l'une des revendications 1 à 9, caractérisé en ce que l'unité de sortie (5, 6) amène à l'interrupteur qui peut être commandé (13) des valeurs quantifiées avec précision (Df) de la durée d'enclenchement respectivement dans le cycle de la fréquence de commutation.
